# FASCICULE DE BREVET EUROPEEN

(11) **EP 2 749 497 B1**
(45) Date de publication et mention de la délivrance du brevet: **06.07.2016**
(21) Numéro de dépôt: 13306724.9
(22) Date de dépôt: 13.12.2013
(51) Int. Cl.: B64D 9/00, B64F 1/32

(54) **Procédé de traitement automatisé et ordonné de bagages dans un aéronef**
Verfahren zur automatisierten geordneten Behandlung von Gepäck in einem Luftfahrzeug
Method for automated, ordered processing of luggage in an aircraft

(30) Priorité: 17.12.2012 FR 1262145
(43) Date de publication de la demande: 02.07.2014
(73) Titulaire: Airbus Opérations SAS, 31060 Toulouse (FR)
(72) Inventeur: Durand, Yves, 31840 AUSSONNE (FR); Guering, Bernard, 31850 MONTRABE (FR)
(74) Mandataire: Fantin, Laurent

(56) Documents cités:
- EP-A2- 2 551 194
- FR-A1- 2 696 709
- FR-A1- 2 712 565
- US-A1- 2007 109 127
- US-A1- 2007 284 481
- US-A1- 2008 128 248

## Description

La présente invention est relative à un procédé de traitement automatisé de bagages dans un aéronef.

Dans le transport aérien, les compagnies dites « low-cost » proposent des vols à des prix très bas.

Aussi, afin de pouvoir générer suffisamment de profits, ces compagnies cherchent constamment à augmenter la fréquence des vols de façon à réaliser plus de rotations dans une journée.

Pour ce faire, chaque étape d'une rotation est optimisée afin d'en réduire la durée.

La présente invention vise à réduire la durée d'une étape dénommée « turnaround » débutant à l'arrivée de l'aéronef à l'aérogare et finissant lors du départ de l'aéronef vers le taxyway en vue du décollage.

Cette étape peut se décomposer en différentes phases : - Débarquement et embarquement des passagers, - Nettoyage de l'avion, - Embarquement des besoins passagers : nourriture, boissons, etc. - Ravitaillement en carburant, etc. - Déchargement et chargement des bagages des passagers.

La présente invention concerne plus particulièrement le chargement et le déchargement des bagages des passagers en soute.

Selon une première méthode connue, le chargement et le déchargement des bagages en soute s'effectue avec des containers.

Avant le vol, les bagages sont préchargés manuellement dans des containers qui sont ensuite chargés dans la soute de l'aéronef, et après le vol, les containers sont déchargés puis vidés manuellement, les bagages étant mis à disposition des passagers au fur et à mesure sur des convoyeurs.

Cette première méthode, entièrement manuelle, ne satisfait pas les passagers qui doivent attendre longtemps pour enregistrer leurs bagages avant le vol, et pour récupérer leurs bagages après le vol.

En plus, le chargement et le déchargement manuels sont des opérations pénibles et coûteuses.

Selon une seconde méthode connue, le chargement et le déchargement des bagages en soute s'effectue par l'intermédiaire de plateformes de transfert sur lesquelles les bagages sont chargés et déchargés de manière automatisée, comme cela est décrit dans le document WO-2006/040421.

Le traitement automatisé des bagages décrit dans ce document WO-2006/040421 permet de réduire la durée du « turnaround », mais il ne permet pas un traitement en continu des bagages, chaque plateforme de transfert devant être remplie avant d'être acheminée vers la soute de l'aéronef.

Par conséquent, au départ de l'aéronef, les bagages ne peuvent pas être chargés dans la soute de l'aéronef au fur et à mesure de l'arrivée des passagers à la porte d'embarquement, et à l'arrivée, les passagers doivent aussi attendre un certain temps avant de récupérer leurs bagages.

De plus, cette seconde méthode nécessite des bagages spécifiques avec des dimensions particulières et des moyens d'entrainement par crémaillère.

D'un point de vue général, les temps d'attente pour déposer et récupérer les bagages poussent les passagers à ne pas les faire charger en soute.

Et, les passagers, qui sont pressés de sortir de l'aéronef et de récupérer leurs bagages, préfèrent charger leurs bagages en cabine dans les coffres à bagages. Cependant, ces coffres à bagages situés en cabine ne sont pas prévus pour recevoir de nombreux bagages, d'autant que les passagers ont tendance à embarquer avec des bagages de plus en plus volumineux.

Et, le chargement et le déchargement des coffres à bagages par certains passagers gêne l'embarquement et le débarquement des autres passagers, ce qui vient rallonger la durée de ces deux phases du « turnaround ».

US 2007/0284481 A divulgue un procédé de traitement automatisé de bagages dans un aéronef, la soute de l'aéronef comprenant un dispositif de traitement automatisé pour charger et décharger de manière automatisée et autonome des bagages dans la soute dans l'ordre dans lequel les passagers embarquent et débarquent, le procédé comprenant une étape de conditionnement des bagages dans laquelle les bagages sont pourvues des étiquettes intelligentes permettant leur identification.

FR 2 696 709 décrit un procédé d'emballage automatisé des bagages par un film thermorétractable.

Aussi, la présente invention vise à pallier les inconvénients de l'art antérieur relatif au chargement et au déchargement en soute des bagages et, par voie de conséquence, a diminuer le nombre de bagages chargés en cabine dans les coffres à bagages en incitant les passagers à charger leurs bagages en soute. Dans cet objectif, l'invention propose un procédé de traitement automatisé de bagages dans
un aéronef selon la revendication 1 permettant d'écourter les phases d'embarquement et de débarquement des passagers.

Selon l'invention, la soute de l'aéronef comprend un dispositif de traitement automatisé des bagages, qui fonctionne de manière autonome pour charger les bagages dans la soute de l'aéronef, chaque bagage étant conditionné à cet effet dans une enveloppe de conditionnement comprenant des repères visuels, et le dispositif de traitement automatisé comprenant à cet effet des moyens de visualisation de ces repères visuels.

Plus en détails, les repères visuels permettent au dispositif de traitement automatisé, via ses moyens de visualisation, de connaître les formes et les dimensions extérieures des bagages pour effectuer le chargement de ces bagages dans la soute.

Toujours selon l'invention, les bagages sont chargés dans la soute de l'aéronef dans un ordre fonction de l'ordre dans lequel les passagers embarquent dans l'aéronef.

De préférence, afin de réduire le temps d'embarquement des passagers, les bagages sont chargés dans la soute de l'aéronef dans l'ordre dans lequel les passagers embarquent dans l'aéronef.

Les bagages sont chargés de manière individualisée dans la soute de l'aéronef par le dispositif de traitement automatisé de bagages.

Les bagages sont déchargés de manière automatisée de la soute de l'aéronef dans un ordre fonction de l'ordre dans lequel les passagers débarquent de l'aéronef.

De préférence, afin de réduire le temps de débarquement des passagers, les bagages sont déchargés de la soute de l'aéronef dans l'ordre dans lequel les passagers débarquent de l'aéronef.

Les bagages sont déchargés individuellement de la soute de l'aéronef par le dispositif de traitement automatisé de bagages. Toujours afin de réduire le temps de débarquement des passagers, les bagages peuvent être déchargés de la soute sur un convoyeur situé à l'extérieur de l'aéronef et à proximité de la soute.

Pour faciliter leur traitement, et avant leur chargement dans la soute de l'aéronef, chaque bagage est conditionné dans une enveloppe de conditionnement prenant la forme d'un film de protection et utilisée pour compacter le bagage à traiter.

En vue d'une complète automatisation du chargement et du déchargement individualisé des bagages, les bagages peuvent être conditionnés de manière automatisée par un dispositif de conditionnement.

Dans le même objectif, les bagages conditionnés dans leur enveloppe peuvent être convoyés de manière automatisée vers la soute de l'aéronef.

Pour faciliter l'automatisation du chargement individualisé des bagages, les différents bagages à traiter ont des formes et des volumes identiques.

Pour la mise en oeuvre de ce procédé de traitement automatisé de bagages dans un aéronef, l'invention prévoit une enveloppe spécifique de conditionnement. Cette enveloppe spécifique prend la forme d'un film de protection, et elle est utilisée pour compacter le bagage, le bagage étant emballé dans le film de protection sous une dépression.

D'autres caractéristiques et avantages ressortiront de la description qui va suivre de l'invention, description donnée à titre d'exemple uniquement, en regard des dessins annexés sur lesquels : - la figure 1 est une vue en perspective d'un dispositif de conditionnement automatisé de bagages, cette vue illustrant l'invention, - la figure 2 est une vue partielle d'une soute d'aéronef équipée d'un dispositif de traitement automatisé dans un premier mode de réalisation, cette vue illustrant l'invention, - la figure 3 est une vue partielle d'une soute d'aéronef équipée d'un dispositif de traitement automatisé dans un second mode de réalisation, cette vue illustrant l'invention, - la figure 4 est une vue en perspective d'un bras automatisé d'un dispositif de traitement automatisé dans un premier mode de réalisation, cette vue illustrant l'invention, - la figure 5 est une vue en perspective des bras automatisés d'un dispositif de traitement automatisé dans un second mode de réalisation, cette vue illustrant l'invention.

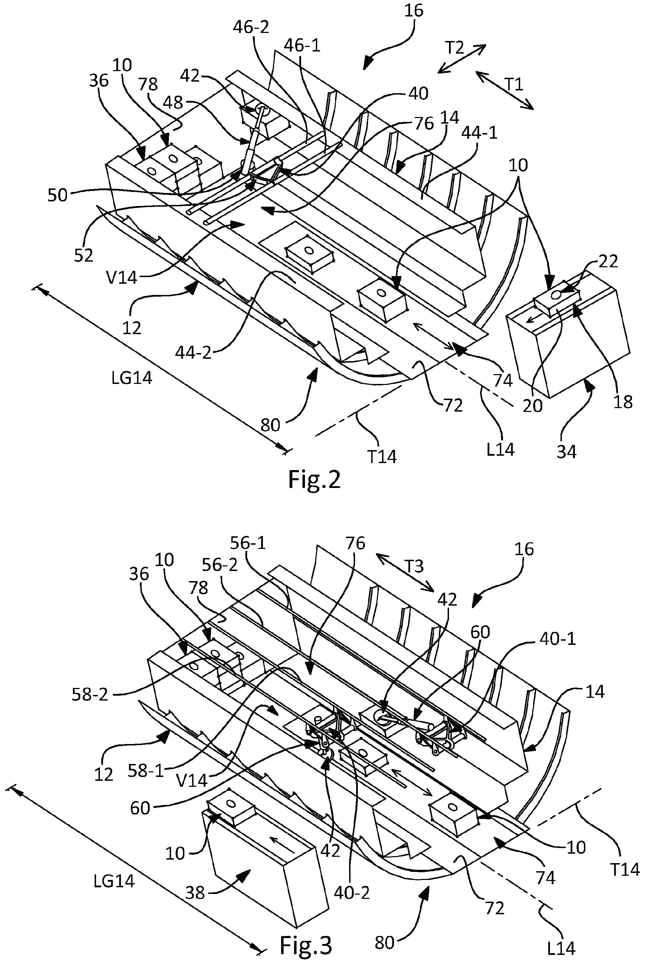

La présente invention est relative à un procédé de traitement automatisé de bagages 10 dans un aéronef 12, la soute 14 de cet aéronef 12 comprenant un dispositif 16 de traitement automatisé des bagages 10, comme l'illustrent les figures 2 et 3.

Par traitement des bagages 10, l'invention entend le convoyage, la préhension et la manutention des bagages 10 en vue de leur chargement dans la soute 14 et de leur déchargement de cette soute 14.

Et, par opération automatisée, l'invention entend une opération effectuée par une machine, sans opération manuelle, c'est-à-dire sans impliquer l'utilisation de la force d'un opérateur ou d'un technicien.

Dans le procédé selon l'invention, les bagages 10 sont chargés de manière automatisée dans la soute 14 de l'aéronef 12 par le dispositif 16 de traitement automatisé de bagages.

Par chargement, l'invention entend l'opération visant à stocker les bagages 10 de manière ordonnée dans la soute 14.

Selon l'invention, un chargement ordonné a pour objectif de stocker un maximum de bagages 10 dans la soute 14 sans perte de volume.

Durant l'opération de chargement, il peut être utilisé des moyens de retenue tels des filets connus de l'art antérieur pour assurer la stabilité des bagages 10 au fur et à mesure de leur chargement dans la soute 14.

Avantageusement, ces moyens de retenue assurent aussi la stabilité des bagages 10 chargés durant le vol de l'aéronef.

Contrairement au préchargement en containers de l'art antérieur, dans la présente invention, les bagages 10 sont chargés individuellement dans la soute 14 de l'aéronef 12 par le dispositif 16 de traitement automatisé de bagages.

Par individuellement, l'invention entend que les bagages 10 sont chargés un par un par le dispositif 16 de traitement automatisé dans la soute 14.

En vue de sa manutention par le dispositif 16 de traitement automatisé, et juste avant son chargement dans la soute 14 de l'aéronef, chaque bagage 10 est conditionné dans une enveloppe 18 de conditionnement prenant la forme d'un film de protection 20.

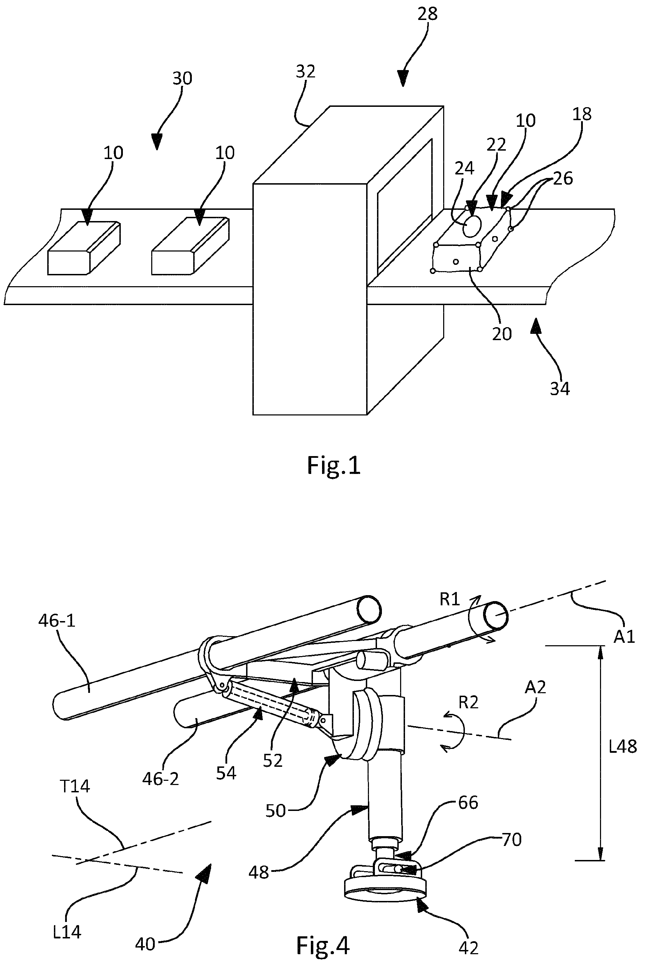

En vue de la manutention du bagage 10 par le dispositif 16, cette enveloppe 18 de conditionnement comprend une surface 22 de préhension distincte mais solidaire du film de protection 20, comme représenté en figure 1.

Dans une première variante préférée, la surface 22 est adaptée pour une préhension par dépression. A cet effet, la surface 22 est lisse.

Dans une seconde variante, la surface 22 est adaptée pour une préhension magnétique. A cet effet, la surface 22 est magnétisable.

Dans la première ou dans la seconde variante, la surface 22 de préhension est portée par un disque 24.

Aussi, dans la première variante, le disque 24 peut être réalisé dans un matériau plastique, alors que dans la deuxième variante, le disque 24 peut être réalisé dans un matériau métallique.

Le film de protection 20 est en matériau plastique, éventuellement renforcé par une trame de fibres de verre.

Pour une manutention sûre, les bagages 10 sont emballés dans le film de protection 20 sous une légère dépression.

En plus de sa fonction relative à la manutention d'un bagage 10, ce film de protection 20 permet de protéger le bagage 10 contre les coups durant son traitement.

Le film de protection 20 est aussi un gage de non violation du bagage 10, l'intégrité du film 20 pouvant être vérifiée visuellement et rapidement, lors d'un contrôle par un agent de l'aérogare ou par le passager après son débarquement, pour s'assurer que le bagage 10 n'a pas été ouvert.

Le film de protection 20 permet aussi d'éviter une ouverture accidentelle du bagage 10.

Le film de protection 20 permet surtout de ramener les poignées, les sangles ou tout autre élément contre le corps principal du bagage 10, évitant ainsi des désagréments lors de la manutention et lors du convoyage du bagage 10.

Selon un autre avantage, l'enveloppe 18 peut être utilisée pour compacter chaque bagage 10 à traiter.

A cet effet, chaque bagage 10 est emballé dans le film de protection 20 sous une légère dépression.

Ce compactage des bagages 10 facilite leur traitement, par exemple en générant des faces inférieures et supérieures sensiblement planes, et leur chargement sans perte de volume dans la soute 14.

En vue de l'automatisation du procédé de traitement individualisé, l'enveloppe 18 peut comprendre une étiquette intelligente dans laquelle sont stockées différentes informations relatives au bagage 10 conditionné et utiles au traitement automatisé du bagage 10.

Parallèlement, le dispositif 16 de traitement automatisé comprend des moyens pour lire ces étiquettes intelligentes.

Ainsi, le dispositif 16 de traitement automatisé peut utiliser les informations contenues dans les étiquettes intelligentes pour améliorer le traitement des bagages 10.

De préférence, les informations contenues dans l'étiquette intelligente concernent les formes et les dimensions extérieures du bagage 10.

Et, le dispositif 16 de traitement automatisé utilise ces informations pour effectuer le chargement individualisé des bagages 10 dans la soute 14.

Grâce à l'acquisition de ces informations concernant les formes et les dimensions extérieures de chaque bagage 10, le dispositif 16 de traitement automatisé permet d'agencer les différents bagages 10 dans la soute 14 sans perte de volume.

En vue d'améliorer la manutention effectuée par le dispositif 16 de traitement automatisé, les informations contenues dans l'étiquette intelligente peuvent concerner : le centre de gravité du bagage 10, son poids, le type du bagage 10, et la catégorie du bagage 10 : fragilité, danger, etc.

Par exemple, la connaissance de la position du centre de gravité du bagage 10 permet au dispositif 16 de traitement automatisé d'effectuer la manutention sans que le bagage 10 ait tendance à basculer, et donc sans devoir contrer un couple de basculement.

Pour favoriser la traçabilité des bagages 10, les informations contenues dans l'étiquette intelligente peuvent concerner : l'identité du passager propriétaire du bagage 10 et l'identification du ou des aéronef(s) 12 dans lequel le bagage 10 doit être chargé.

En vue de l'automatisation du procédé de traitement individualisé, l'enveloppe 18 peut comprendre des repères visuels 26.

Parallèlement, le dispositif 16 de traitement automatisé comprend des moyens de visualisation de ces repères visuels 26, tels des caméras et des moyens de traitement d'images appropriés.

Les moyens de visualisation du dispositif 16 fonctionnent comme des moyens de capture de mouvement, les repères visuels 26 étant les marqueurs utiles à cette capture.

Grâce aux repères visuels 26, et le dispositif 16 de traitement automatisé connaissant de manière virtuelle l'environnement de la soute 14, le dispositif 16 de traitement automatisé permet de localiser virtuellement un bagage 10 dans la soute 14.

Il n'est donc pas nécessaire que les bagages 10 arrivent à un endroit précis et dans une orientation précise pour pouvoir être manipulés par le dispositif 16 de traitement automatisé.

L'environnement virtuel de la soute 14 peut être acquis par le dispositif 16 de traitement automatisé de différentes manières.

Dans une première variante, la soute 14 de l'aéronef 12 est modélisée numériquement par un dispositif extérieur, puis l'environnement virtuel ainsi créé est acquis par le dispositif 16 de traitement automatisé.

Dans une seconde variante, la soute 14 de l'aéronef est équipée de cibles visuelles, similaires aux repères visuels 26 équipant l'enveloppe 18 des bagages 10 et repérables par les moyens de visualisation du dispositif 16 de traitement automatisé pour modéliser numériquement la soute 14.

En alternative aux étiquettes intelligentes, les repères visuels 26 permettent au dispositif 16 de traitement automatisé, via ses moyens de visualisation, de connaître les formes et les dimensions extérieures du bagage 10.

Grâce aux repères visuels 26, des bagages 10 de différentes formes et de différentes dimensions peuvent être traités par le dispositif 16 de traitement automatisé.

Et, le dispositif 16 de traitement automatisé peut utiliser les informations fournies par les repères visuels 26 pour effectuer le chargement des bagages 10 dans la soute 14, et plus particulièrement pour agencer les différents bagages 10 dans la soute 14 sans perte de volume.

En vue d'améliorer la manutention effectuée par le dispositif 16 de traitement automatisé, les informations fournies par les repères visuels 26 peuvent aussi permettre de déterminer : le centre de gravité du bagage 10, le type du bagage 10, etc.

Grâce aux étiquettes intelligentes et/ou aux repères visuels 26 des enveloppes 18 des bagages 10 et/ou aux cibles visuelles équipant la soute 14, le dispositif 16 de traitement automatisé autorise un chargement autonome ou semi-autonome des bagages 10, comme détaillé ultérieurement.

En vue d'une complète automatisation du procédé de traitement individualisé selon l'invention, les bagages 10 sont conditionnés de manière automatisée par un dispositif de conditionnement 28, tel celui illustré en figure 1.

Ce dispositif de conditionnement 28, par exemple prévu dans les quais d'embarquement d'une aérogare à proximité de chaque passerelle d'embarquement, comprend un convoyeur d'entrée 30 sur lequel sont déposés les bagages 10 à conditionner, un dispositif 32 pour conditionner automatiquement chaque bagage 10 dans une enveloppe 18 de protection, et un convoyeur de sortie 34 sur lequel transitent les bagages 10 conditionnés.

De préférence, le conditionnement automatisé des bagages 10 a lieu juste avant l'embarquement des passagers.

Avantageusement, le dispositif de conditionnement 28 permet de mettre en oeuvre le compactage des bagages 10.

A cet effet, il peut être prévu un plateau supérieur et un plateau inférieur écrasant le bagage 10 lors de son conditionnement, l'écrasement étant contrôlé de façon que la valeur d'écrasement se rapproche d'une pression correspondant à celle pouvant être appliquée sur un bagage lorsque le bagage est disposé sous d'autres bagages.

Pour faciliter le conditionnement automatisé des bagages 10 et favoriser un remplissage optimal de la soute 14 par le dispositif 16 de traitement automatisé, les différents bagages 10 à traiter ont idéalement des formes, par exemple parallélépipédique, et des volumes sensiblement identiques, et par exemple imposés par la compagnie aérienne par le biais d'une politique de prime compagnie. En variante, des bagages 10 pré-conditionnés et intégrant l'enveloppe de protection 18 avec la surface de préhension 22 pourront être prévus, et par exemple vendus aux passagers par la compagnie aérienne.

En vue d'une complète automatisation du procédé de traitement individualisé, les bagages 10 conditionnés dans leur enveloppe 18 peuvent être convoyés de manière automatisée vers la soute 14 de l'aéronef 12.

Par exemple, comme illustré en figure 2, le convoyeur de sortie 34 du dispositif de conditionnement 28 permet de transporter les bagages 10 conditionnés jusqu'à l'entrée de la soute 14 de l'aéronef.

Dans le procédé de traitement automatisé et individualisé selon l'invention, les bagages 10 sont aussi déchargés de manière automatisée de la soute 14 de l'aéronef 12 par le dispositif 16 de traitement automatisé de bagages.

Comme pour le chargement, les bagages 10 sont déchargés individuellement de la soute 14 de l'aéronef 12 par le dispositif 16 de traitement automatisé de bagages.

Par déchargement, l'invention entend l'opération consistant à séparer chaque bagage 10 de l'ensemble 36 des bagages 10 stockés de manière ordonnée dans la soute 14.

Grâce aux étiquettes intelligentes et/ou aux repères visuels 26 des enveloppes 18 des bagages 10 et/ou aux cibles visuelles équipant la soute 14, le dispositif 16 de traitement automatisé offre un déchargement autonome ou semi-autonome des bagages 10, comme détaillé ultérieurement.

Avantageusement, les bagages 10 sont déchargés de la soute 14 sur un convoyeur 38 situé à l'extérieur de l'aéronef 12 et à proximité de la soute 14.

Ce convoyeur 38 permet de mettre les bagages 10 à disposition des passagers, qui peuvent ainsi récupérer leurs bagages 10 directement en débarquant de l'aéronef 12.

Selon l'invention, les bagages 10 sont chargés dans la soute 14 de l'aéronef 12 dans un ordre fonction de l'ordre dans lequel les passagers embarquent dans l'aéronef.

De préférence, pour fluidifier la phase d'embarquement des passagers, les bagages 10 sont chargés dans la soute 14 de l'aéronef 12 dans l'ordre dans lequel les passagers embarquent dans l'aéronef.

L'arrivée des bagages 10 dans la soute 14 de l'aéronef 12 dans le même ordre que les passagers est favorisée par la présence du dispositif de conditionnement 28 dans le quai d'embarquement à proximité de la passerelle d'embarquement.

En effet, les bagages 10 sont déposés par les passagers sur le convoyeur d'entrée 30 du dispositif de conditionnement 28 au fur et à mesure de leur embarquement, puis ces bagages 10 sont conditionnés et convoyés automatiquement dans l'ordre d'embarquement des passagers vers la soute 14 de l'aéronef.

De même, selon l'invention, les bagages 10 sont déchargés de la soute 14 de l'aéronef 12 dans un ordre fonction de l'ordre dans lequel les passagers débarquent de l'aéronef.

De préférence, pour fluidifier la phase de débarquement des passagers, les bagages 10 sont déchargés de la soute 14 de l'aéronef 12 dans l'ordre dans lequel les passagers débarquent de l'aéronef.

Aussi, dans le cas où les passagers débarquent dans l'ordre inverse de l'ordre dans lequel ils ont embarqué, les bagages 10 sont chargés dans la soute 14 de l'aéronef dans l'ordre dans lequel les passagers embarquent, et ils pourront être déchargés dans l'ordre dans lequel les passagers débarquent.

Dans une variante optimisée du procédé de traitement individualisé selon l'invention, le dispositif 16 de traitement automatisé fonctionne de manière autonome.

Par fonctionnement autonome, l'invention entend un fonctionnement sans aucune intervention humaine.

Le dispositif 16 de traitement automatisé fonctionne de manière autonome au moins pour charger les bagages 10 dans la soute 14 de l'aéronef 12.

Un tel chargement autonome est permis par les repères visuels 26 présents sur les bagages 10 et par les moyens de visualisation du dispositif 16 de traitement automatisé, et éventuellement par les étiquettes intelligentes équipant les bagages 10 et par les moyens de lecture de ces étiquettes dont dispose le dispositif 16.

Bien entendu, le dispositif 16 de traitement est programmé pour la mise en oeuvre d'un tel chargement autonome.

Dans ce mode de fonctionnement autonome, le dispositif 16 de traitement est capable de visualiser, de localiser, d'identifier, de saisir et de manutentionner seul et automatiquement les bagages 10 arrivant dans la soute 14 de l'aéronef 12. Par exemple, pour l'identification de chaque bagage 10, le dispositif 16 de traitement attribue un index différent à chaque bagage 10.

Avantageusement, grâce à la visualisation des formes et des dimensions des différents bagages 10, à la connaissance virtuelle de l'environnement de la soute 14 de l'aéronef, et à un programme approprié, le dispositif 16 de traitement automatisé est capable d'agencer différents bagages 10 dans la soute 14 sans perte de volume.

Le dispositif 16 de traitement automatisé peut aussi fonctionner de manière autonome pour décharger les bagages 10 de la soute 14 de l'aéronef 12.

Et, les fonctionnements des différents convoyeurs 30,34,38, et/ou du dispositif de conditionnement 28 peuvent aussi être facilement rendus autonomes à l'aide de différents capteurs et de programmes appropriés.

Dans une variante moins optimisée du procédé de traitement individualisé selon l'invention, le fonctionnement du dispositif 16 de traitement automatisé est semi-autonome.

Par semi-autonome, l'invention entend un fonctionnement partiellement contrôlé par un opérateur.

De préférence, le fonctionnement du dispositif 16 de traitement automatisé est commandé à distance par un opérateur.

A cet effet, l'opérateur peut être en immersion dans la soute 14 depuis sa salle de travail par le biais d'un écran tactile ou d'un casque immersif.

Ce poste de commande à distance du dispositif 16 peut se trouver à l'entrée de la soute 14, dans la cabine de l'aéronef 12, ou même dans l'aérogare.

Pour la mise en oeuvre de ce fonctionnement semi-autonome, il peut être prévu des moyens immersifs permettant à l'opérateur de se transposer virtuellement dans la soute 14 de l'aéronef, l'environnement virtuel de la soute 14 ayant été acquis au préalable par le dispositif 16 de traitement automatisé. Avantageusement, le travail à distance de l'opérateur est assisté et facilité par les repères visuels 26 présents sur les bagages 10 et par les moyens de visualisation du dispositif 16 de traitement automatisé, et éventuellement par les étiquettes intelligentes équipant les bagages 10 et par les moyens de lecture de ces étiquettes dont dispose le dispositif 16.

En effet, comme dans le mode de fonctionnement autonome, le dispositif 16 de traitement est capable de visualiser, de localiser, et d'identifier seul et automatiquement les bagages 10 arrivant dans la soute 14 de l'aéronef 12.

Par la suite, l'opérateur n'a plus qu'à guider le dispositif 16 de traitement automatisé, via l'écran tactile ou les moyens immersifs, pour effectuer la préhension et la manutention des bagages 10 en vue d'agencer différents bagages 10 dans la soute 14 sans perte de volume.

Par exemple, dans le cas d'un chargement des bagages semi-autonome, le rôle de l'opérateur est de sélectionner, via l'écran tactile, un des bagages 10 identifiés par un index, et d'indiquer, toujours via l'écran tactile, au dispositif 16 de traitement automatisé où déposer le bagage 10 choisi dans la soute 14, le dispositif 16 étant programmé pour assurer seul la préhension et la manutention du bagage 10 jusqu'à l'endroit indiqué par l'opérateur, et cette séquence étant répétée par l'opérateur pour chaque bagage 10 à charger.

Ou, dans une procédure plus automatisée, l'opérateur n'a qu'à sélectionner les bagages 10 l'un après l'autre, le dispositif 16 étant programmé pour trouver seul l'endroit le plus approprié pour déposer chaque bagage 10 sélectionné dans la soute 14, ainsi que pour assurer seul la préhension et la manutention du bagage 10 sélectionné jusqu'à l'endroit le plus approprié.

Le dispositif 16 de traitement automatisé peut fonctionner de manière semi-autonome pour charger les bagages 10 dans la soute 14 de l'aéronef 12, ainsi que pour décharger les bagages 10 de la soute 14 de l'aéronef 12.

Les fonctionnements des différents convoyeurs 30,34,38, et du dispositif de conditionnement 28 étant liés à celui du dispositif 16 de traitement automatisé, ces fonctionnements sont aussi semi-autonomes.

L'invention prévoit aussi une conception d'une soute 14 d'aéronef 12 permettant la mise en oeuvre du procédé de traitement automatisé et individualisé qui vient d'être décrit.

Comme indiqué précédemment, la soute 14 permettant cette mise en oeuvre du procédé comprend un dispositif 16 de traitement automatisé de bagages 10.

Ce dispositif 16 de traitement automatisé de bagages 10 est embarqué car il est toujours présent dans la soute 14 de l'aéronef.

Dans la présente description, l'axe longitudinal L14 de la soute est un axe sensiblement horizontal et parallèle à l'axe avion s'étendant de l'avant à l'arrière de l'aéronef, et l'axe transversal T14 de la soute 14 est un axe sensiblement horizontal et perpendiculaire à cet axe avion.

Dans un premier mode de réalisation illustré par les figures 2 et 4, ce dispositif 16 de traitement automatisé comprend un unique bras automatisé 40 de manutention des bagages 10, ce bras automatisé 40 étant monté mobile en translation T1 parallèlement à l'axe longitudinal L14 de la soute 14 de l'aéronef 12.

Avantageusement, le bras automatisé 40 peut se translater sur toute la longueur L614 de la soute 14.

En vue de la manutention des bagages 10, ce bras automatisé 40 comprend une tête de préhension 42 d'un bagage 10.

Dans une première variante préférée du bras automatisé 40, la tête de préhension 42 fonctionne par dépression. A cet effet, cette tête de préhension 42 prend par exemple la forme d'une ventouse.

Dans une seconde variante du bras automatisé 40, la tête de préhension 42 fonctionne par magnétisme. A cet effet, cette tête de préhension 42 comprend par exemple un électroaimant.

Pour faciliter la préhension de chaque bagage 10 par la tête de préhension 42, la surface 22 de préhension de l'enveloppe 18 est de diamètre supérieur au diamètre de la tête de préhension 42, dans la première ou dans la seconde variante du bras automatisé 40.

Dans ce premier mode de réalisation, le bras automatisé 40 est aussi monté mobile en translation T2 parallèlement à l'axe transversal T14 de la soute 14 de l'aéronef.

Et, le bras automatisé 40 offre une première mobilité en rotation R1 autour d'un premier axe A1 parallèle à l'axe transversal T14 de la soute 14 de l'aéronef 12, et une deuxième mobilité en rotation R2 autour d'un deuxième axe A2 perpendiculaire au premier axe A1.

Pour obtenir de telles mobilités du bras 40, il est prévu deux montants longitudinaux 44-1,44-2 fixés de part et d'autre de la soute 14 parallèlement à l'axe longitudinal L14 de celle-ci, ainsi que deux montants transversaux 46-1,46-2 coulissant perpendiculairement à l'axe longitudinal L14 sur ces deux montants longitudinaux 44-1,44-2.

Et, le bras 40 comprend un corps 48 monté en rotation sur une platine 50 montée pivotante sur un coulisseau 52 se translatant sur les montants transversaux 46-1,46-2.

La rotation R2 du corps 48 par rapport à la platine 50 et la translation T2 du coulisseau 52 par rapport aux montants transversaux 46-1,46-2 peuvent être entraînées par des moteurs, tandis que la rotation R1 de la platine 50 par rapport au coulisseau 52 peut être entraînée par un vérin 54.

Grâce à ses différentes mobilités, le bras 40 peut se déplacer dans tout le volume V14 de la soute 14.

Avantageusement, les différentes mobilités du bras automatisé 40 peuvent être utilisées simultanément.

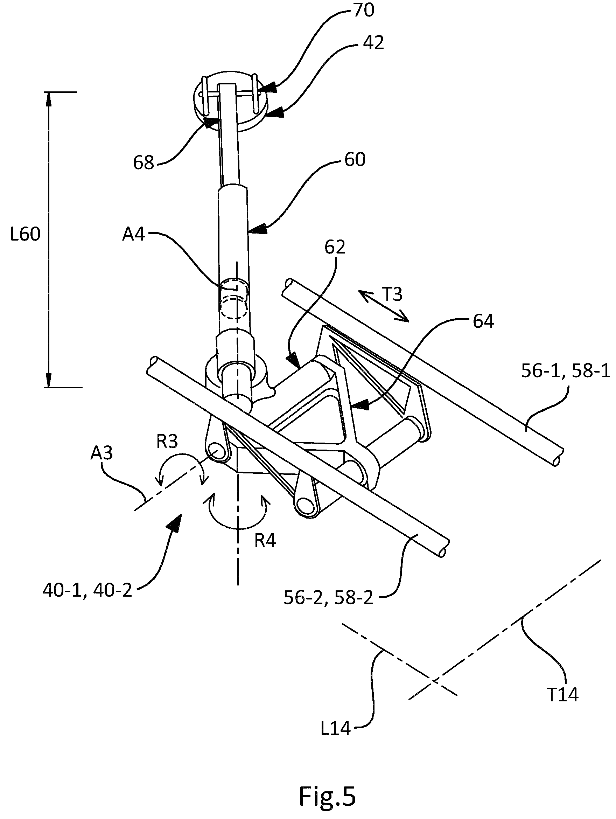

Dans un second mode de réalisation illustré par les figures 3 et 5, le dispositif 16 de traitement automatisé comprend deux bras automatisés 40-1,40-2 de manutention des bagages 10, ces bras automatisés 40-1,40-2 étant montés mobiles en translation T3 parallèlement entre eux et parallèlement à l'axe longitudinal L14 de la soute 14 de l'aéronef 12.

Avantageusement, les bras automatisés 40-1,40-2 peuvent se translater sur toute la longueur LG14 de la soute 14.

En vue de la manutention des bagages 10, chacun de ces bras automatisés 40-1,40-2 comprend une tête de préhension 42 d'un bagage 10.

Dans une première variante préférée des bras automatisés 40-1,40-2, la tête de préhension 42 fonctionne par dépression. A cet effet, cette tête de préhension 42 prend par exemple la forme d'une ventouse.

Dans une seconde variante des bras automatisés 40-1,40-2, la tête de préhension 42 fonctionne par magnétisme. A cet effet, cette tête de préhension 42 comprend par exemple un électroaimant.

Pour faciliter la préhension de chaque bagage 10 par la tête de préhension 42, la surface 22 de préhension de l'enveloppe 18 est de diamètre supérieur au diamètre de la tête de préhension 42, dans la première ou dans la seconde variante des bras automatisés 40-1,40-2.

Dans ce second mode de réalisation, chaque bras automatisé 40-1,40-2 offre aussi une première mobilité en rotation R3 autour d'un premier axe A3 parallèle à l'axe transversal T14 de la soute 14 de l'aéronef 12, et une deuxième mobilité en rotation R4 autour d'un deuxième axe A4 perpendiculaire au premier axe A3. Pour obtenir de telles mobilités, il est prévu, pour chaque bras automatisé 40-1,40-2, deux montants longitudinaux 56-1,56-2 et 58-1,58-2 fixés parallèlement à l'axe longitudinal L14 de la soute 14, chaque bras automatisé 40-1,40-2 coulissant parallèlement à l'axe longitudinal L14 sur ces deux montants longitudinaux 56-1,56-2 et 58-1,58-2.

Et, chaque bras automatisé 40-1,40-2 comprend un corps 60 monté en rotation sur une platine 62 montée pivotante sur un coulisseau 64 se translatant sur les montants longitudinaux 56-1,56-2 et 58-1,58-2.

La rotation R4 du corps 60 par rapport à la platine 62 et la translation T3 du coulisseau 64 par rapport aux montants longitudinaux 56-1,56-2 et 58-1,58-2 peuvent être entraînées par des moteurs, tandis que la rotation R3 de la platine 62 par rapport au coulisseau 64 peut être entraînée par un vérin.

Grâce à leurs différentes mobilités, les bras 40-1,40-2 couvrent la totalité du volume V14 de la soute 14.

Avantageusement, les deux bras 40-1,40-2 fonctionnent indépendamment, et les différentes mobilités de chacun des bras 40-1,40-2 peuvent être utilisées simultanément.

Dans un mode de fonctionnement semi-autonome, les bras 40-1,40-2 sont de préférence commandés à distance par des opérateurs différents.

Dans le premier et dans le second mode de réalisation du dispositif 16 de traitement automatisé, chaque bras automatisé 40,40-1,40-2 comprend un corps 48,60 extensible dans sa longueur L48,L60.

A cet effet, un corps 48,60 a une conception télescopique, à 3 brins par exemple.

Toujours dans le premier et dans le second mode de réalisation du dispositif 16 de traitement automatisé, la tête de préhension 42 étant montée à l'extrémité inférieure 66,68 du corps 48,60, la tête de préhension 42 est montée à cette extrémité inférieure 66,68 par l'intermédiaire d'une rotule 70, de préférence à retour élastique.

Encore dans le premier et dans le second mode de réalisation du dispositif 16 de traitement automatisé, il peut être prévu que le plancher 72 de la soute 14 de l'aéronef 12 comprenne un convoyeur 74 à bagages disposé parallèlement à l'axe longitudinal L14 de la soute 14 de l'aéronef.

De préférence, ce convoyeur 74 s'étend jusqu'à proximité du fond 76 de la soute 14, le ou les bras 40,40-1,40-2 pouvant ainsi travailler sans se déplacer en translation longitudinale T1,T3 dans le fond 76 de la soute 14 en début de chargement ou en fin de déchargement.

Ce convoyeur 74 complémentaire, aussi utile lors du chargement que du déchargement des bagages 10, permet de créer une zone de transition dans laquelle des bagages 10 peuvent être stockés temporairement.

En permettant de limiter le nombre et l'amplitude des translations longitudinales T1,T3 des bras automatisés 40,40-1,40-2 dans la longueur de la soute 14, ce convoyeur 74 permet d'accélérer le traitement des bagages 10, tant lors de leur chargement que lors de leur déchargement.

Lors d'un chargement en fonctionnement autonome ou semi-autonome, les bagages 10 sont convoyés par le convoyeur 74 vers le fond 76 de la soute 14 où il sont saisis puis empilés par le ou les bras automatisés 40,40-1,40-2 en attente au fond 76 de la soute 14.

Au début d'un chargement, les bagages 10 sont empilés par le ou les bras automatisés 40,40-1,40-2 contre la paroi transversale 78 du fond 76 de la soute 14, et superposés sur toute la hauteur de la soute 14 jusqu'à former une rangée occupant le plus possible l'espace disponible.

Puis, au fur et à mesure du chargement, le ou les bras automatisés 40,40-1,40-2 se déplacent progressivement en translation longitudinale T1,T3 vers l'entrée 80 de la soute 14 pour former, l'une après l'autres, des rangées de bagages 10.

Une fois le chargement effectué, et donc durant le vol de l'aéronef 12, le ou les bras automatisés 40,40-1,40-2 restent stockés près de l'entrée 80 de la soute 14.

Et, une fois le vol terminé, le déchargement en fonctionnement autonome ou semi-autonome se déroule en sens inverse du chargement : les rangées de bagages 10 étant désempilées l'une après l'autre par le ou les bras automatisés 40,40-1,40-2, de l'entrée 80 vers le fond 76 de la soute 14 et par l'intermédiaire du convoyeur 74.

Grâce à la présente invention, les passagers auront moins d'intérêts à garder des bagages en cabine, et donc les volumes des coffres à bagages pourront être réduits pour offrir plus de confort aux passagers.

## Revendications

1. Procédé de traitement automatisé de bagages (10) dans un aéronef (12), la soute (14) de l'aéronef (12) comprenant un dispositif (16) de traitement automatisé pour charger de manière automatisée et autonome des bagages (10) dans la soute (14), le procédé étant **caractérisé en ce qu'**il comprend une étape de conditionnement des bagages (10) dans une enveloppe (18) de conditionnement comprenant des repères visuels (26) permettant de connaître les formes et les dimensions extérieures des bagages (10), et une étape de reconnaissance des formes et des dimensions extérieures des bagages (10) par le dispositif (16) de traitement automatisé via des moyens de visualisation de ces repères visuels (26) pour effectuer le chargement des bagages (10) dans la soute (14).

2. Procédé de traitement automatisé de bagages (10) dans un aéronef (12) selon la revendication 1, dans lequel les bagages (10) sont chargés dans la soute (14) de l'aéronef (12) dans un ordre fonction de l'ordre dans lequel les passagers embarquent dans l'aéronef.

3. Procédé de traitement automatisé de bagages (10) dans un aéronef (12) selon la revendication 2, dans lequel les bagages (10) sont chargés dans la soute (14) de l'aéronef (12) dans l'ordre dans lequel les passagers embarquent dans l'aéronef.

4. Procédé de traitement automatisé de bagages (10) dans un aéronef (12) selon l'une des revendications précédentes, dans lequel les bagages (10) sont chargés individuellement dans la soute (14) de l'aéronef (12) par le dispositif (16) de traitement automatisé de bagages.

5. Procédé de traitement automatisé de bagages (10) dans un aéronef (12) selon l'une des revendications précédentes, dans lequel le dispositif (16) de traitement automatisé fonctionne de manière autonome pour décharger les bagages (10) de la soute (14) de l'aéronef (12).

6. Procédé de traitement automatisé de bagages (10) dans un aéronef (12) selon la revendication 5, dans lequel les bagages (10) sont déchargés de manière automatisée de la soute (14) de l'aéronef (12) dans un ordre fonction de l'ordre dans lequel les passagers débarquent de l'aéronef.

7. Procédé de traitement automatisé de bagages (10) dans un aéronef (12) selon la revendication 6, dans lequel les bagages (10) sont déchargés de la soute (14) de l'aéronef (12) dans l'ordre dans lequel les passagers débarquent de l'aéronef.

8. Procédé de traitement automatisé de bagages (10) dans un aéronef (12) selon l'une des revendications 5 à 7, dans lequel les bagages (10) sont déchargés individuellement de la soute (14) de l'aéronef (12) par le dispositif (16) de traitement automatisé de bagages (10).

9. Procédé de traitement automatisé de bagages (10) dans un aéronef (12) selon l'une des revendications 5 à 8, dans lequel les bagages (10) sont déchargés de la soute (14) sur un convoyeur (38) situé à l'extérieur de l'aéronef (12) et à proximité de la soute (14).

10. Procédé de traitement automatisé de bagages (10) dans un aéronef (12) selon l'une des revendications précédentes, dans lequel enveloppe (18) de conditionnement prend la forme d'un film de protection (20) et est utilisée pour compacter le bagage (10) à traiter.

11. Procédé de traitement automatisé de bagages (10) dans un aéronef (12) selon la revendication 10, dans lequel les bagages (10) sont conditionnés de manière automatisée par un dispositif de conditionnement (28).

12. Procédé de traitement automatisé de bagages (10) dans un aéronef (12) selon l'une des revendications 10 ou 11, dans lequel les bagages (10) conditionnés dans leur enveloppe (18) sont convoyés de manière automatisée vers la soute (14) de l'aéronef (12).

13. Procédé de traitement automatisé de bagages (10) dans un aéronef (12) selon l'une des revendications précédentes, dans lequel les différents bagages (10) à traiter ont des formes et des volumes identiques.

14. Procédé de traitement automatisé de bagages (10) dans un aéronef (12) selon l'une des revendications précédentes, dans lequel le dispositif (16) de traitement automatisé de bagages (10) utilise les informations fournies par les repères visuels (26) pour agencer les différents bagages (10) dans la soute sans perte de volume.

15. Procédé de traitement automatisé de bagages (10) dans un aéronef (12) selon l'une des revendications précédentes, dans lequel la soute (10) est modélisée numériquement par un dispositif extérieur pour créer un environnement virtuel acquis par le dispositif (16) de traitement automatisé de bagages (10) .

## Patentansprüche

1. Verfahren zur automatisierten Behandlung von Gepäckstücken (10) in einem Luftfahrzeug (12), wobei der Laderaum (14) des Luftfahrzeugs (12) eine Vorrichtung (16) für die automatisierte Behandlung aufweist, um auf automatisierte und eigenständige Weise Gepäckstücke (10) in den Laderaum (14) zu laden, wobei das Verfahren **dadurch gekennzeichnet ist, dass** dieses einen Schritt zur Konditionierung der Gepäckstücke (10) in Konditionierhüllen (18) umfasst, die visuelle Markierungen (26) aufweisen, die es gestatten, die Formen und die äußeren Abmessungen der Gepäckstücke (10) zu erfassen, und einen Schritt umfasst, in dem die Formen und äußeren Abmessungen der Gepäckstücke (10) durch die Vorrichtung (16) für die automatisierte Behandlung mit Hilfe von Mitteln zur Visualisierung der visuellen Markierungen (26) erfasst werden, um den Ladevorgang der Gepäckstücke (10) im Laderaum (14) auszuführen.

2. Verfahren für die automatisierte Behandlung von Gepäckstücken (10) in einem Luftfahrzeug (12) nach Anspruch 1, bei dem die Gepäckstücke (10) in den Laderaum (14) des Luftfahrzeugs (12) in einer Reihenfolge geladen werden, die eine Funktion der Reihenfolge ist, in der die Passagiere in das Luftfahrzeug einsteigen.

3. Verfahren für die automatisierte Behandlung von Gepäckstücken (10) in einem Luftfahrzeug (12) nach Anspruch 2, bei dem die Gepäckstücke (10) in den Laderaum (14) des Luftfahrzeugs (12) in der Reihenfolge geladen werden, in der die Passagiere in das Luftfahrzeug einsteigen.

4. Verfahren für die automatisierte Behandlung von Gepäckstücken (10) in einem Luftfahrzeug (12) nach einem der vorhergehenden Ansprüche, bei dem die Gepäckstücke (10) individuell in den Laderaum (14) des Luftfahrzeugs (12) durch die Vorrichtung (16) für die automatisierte Behandlung der Gepäckstücke geladen werden.

5. Verfahren für die automatisierte Behandlung von Gepäckstücken (10) in einem Luftfahrzeug (12) nach einem der vorhergehenden Ansprüche, bei dem die Vorrichtung (16) für die automatisierte Behandlung auf eigenständige Weise funktioniert, um die Gepäckstücke (10) aus dem Laderaum (14) des Luftfahrzeugs (12) zu entladen.

6. Verfahren für die automatisierte Behandlung von Gepäckstücken (10) in einem Luftfahrzeug (12) nach Anspruch 5, bei dem die Gepäckstücke (10) auf automatisierte Weise aus dem Laderaum (14) des Luftfahrzeugs (12) in einer Reihenfolge entladen werden, die eine Funktion der Reihenfolge ist, in der die Passagiere aus dem Luftfahrzeug aussteigen.

7. Verfahren für die automatisierte Behandlung von Gepäckstücken (10) in einem Luftfahrzeug (12) nach Anspruch 6, bei dem die Gepäckstücke (10) aus dem Laderaum (14) des Luftfahrzeugs (12) in der Reihenfolge entladen werden, in der die Passagiere aus dem Luftfahrzeug aussteigen.

8. Verfahren für die automatisierte Behandlung von Gepäckstücken (10) in einem Luftfahrzeug (12) nach einem der Ansprüche 5 bis 7, bei dem die Gepäckstücke (10) individuell aus dem Laderaum (14) des Luftfahrzeugs (12) durch die Vorrichtung (16) für die automatisierte Behandlung der Gepäckstücke (10) entladen werden.

9. Verfahren für die automatisierte Behandlung von Gepäckstücken (10) in einem Luftfahrzeug (12) nach einem der Ansprüche 5 bis 8, bei dem die Gepäckstücke (10) aus dem Laderaum (14) auf eine Förderanlage (38) entladen werden, die sich außerhalb des Luftfahrzeugs (12) in der Nähe des Laderaums (14) befindet.

10. Verfahren für die automatisierte Behandlung von Gepäckstücken (10) in einem Luftfahrzeug (12) nach einem der vorhergehenden Ansprüche, bei dem die Konditionierhülle (18) als Schutzfolie (20) ausgebildet ist und zum Komprimieren der zu behandelnden Gepäckstücke (10) verwendet wird.

11. Verfahren für die automatisierte Behandlung von Gepäckstücken (10) in einem Luftfahrzeug (12) nach Anspruch 10, bei dem die Gepäckstücke (10) auf automatisierte Weise durch eine Konditioniervorrichtung (28) konditioniert werden.

12. Verfahren für die automatisierte Behandlung von Gepäckstücken (10) in einem Luftfahrzeug (12) nach einem der Ansprüche 10 oder 11, bei dem die in ihren Hüllen (18) konditionierten Gepäckstücke (10) auf automatisierte Weise zum Laderaum (14) des Luftfahrzeugs (12) befördert werden.

13. Verfahren für die automatisierte Behandlung von Gepäckstücken (10) in einem Luftfahrzeug (12) nach einem der vorhergehenden Ansprüche, bei dem die verschiedenen Gepäckstücke (10) haben identische Formen und Volumen.

14. Verfahren für die automatisierte Behandlung von Gepäckstücken (10) in einem Luftfahrzeug (12) nach einem der vorhergehenden Ansprüche, bei die Vorrichtung (16) für die automatisierte Behandlung der Gepäckstücke verwendet die Informationen von den visuelle Markierungen (26) versehen ist, um die verschiedenen Gepäckstücke (10) im Laderaum (14) ohne Volumenverlust zu ordnen.

15. Verfahren für die automatisierte Behandlung von Gepäckstücken (10) in einem Luftfahrzeug (12) nach einem der vorhergehenden Ansprüche, bei der Laderaum (14) numerisch durch eine externe Vorrichtung modelliert, eine virtuelle Umgebung durch die Vorrichtung (16) für die automatisierte Behandlung der Gepäckstücke (10) zu erstellen.

## Claims

1. Method for automated processing of luggage (10) in an aircraft (12), the hold (14) of the aircraft (12) comprising a device (16) for automated processing in an automated and independent way to load the luggage (10) into the hold (14), the method being **characterized by** a baggage (10) conditioning step in a packaging wrapper (18) comprising visual markers (26) to know the shapes and external dimensions of the luggage (10), and a reconnaissance step of the shapes and external dimensions of the luggage (10) by the device (16) for automated processing via viewing means of the visual markers (26) to load the luggage (10) into the hold (14).

2. Method for automated processing of luggage (10) in an aircraft (12) according to the Claim 1, wherein the luggage (10) are loaded into the hold (14) of the aircraft (12) in an order according to the order in which the passengers aboard the aircraft.

3. Method for automated processing of luggage (10) in an aircraft (12) according to the Claim 2, wherein the luggage (10) are loaded into the hold (14) of the aircraft (12) in an order in which the passengers aboard the aircraft.

4. Method for automated processing of luggage (10) in an aircraft (12) according to one of the preceding claims, wherein the luggage (10) are loaded individually into the hold (14) of the aircraft (12) by the device (16) for automated processing of luggage.

5. Method for automated processing of luggage (10) in an aircraft (12) according to one of the preceding claims, wherein the device (16) for automated processing operates in an autonomous way to unload the luggage (10) from the hold (14) of the aircraft (12).

6. Method for automated processing of luggage (10) in an aircraft (12) according to Claim 5, wherein the luggage (10) are unloaded in an automated way from the hold (14) of the aircraft (12) in an order according to the order in which the passengers disembark from the aircraft.

7. Method for automated processing of luggage (10) in an aircraft (12) according to Claim 6, wherein the luggage (10) are unloaded from the hold (14) of the aircraft (12) in the order in which the passengers disembark from the aircraft.

8. Method for automated processing of luggage (10) in an aircraft (12) according to one of Claims 5 to 7, wherein the luggage (10) are unloaded individually from the hold (14) of the aircraft (12) by the device (16) for automated processing of luggage (10).

9. Method for automated processing of luggage (10) in an aircraft (12) according to one of Claims 5 to 8, wherein the luggage (10) are unloaded from the hold (14) on a conveyor (38) located outside the aircraft (12) and close to the hold (14).

10. Method for automated processing of luggage (10) in an aircraft (12) according to one of the preceding claims, wherein the packaging wrapper (18) take the form of a protective film (20) and is used to compact the luggage (10) to be processed.

11. Method for automated processing of luggage (10) in an aircraft (12) according to Claim 10, wherein the luggage (10) are packaged in an automated way by a packaging device (28).

12. Method for automated processing of luggage (10) in an aircraft (12) according to either of Claims 10 and 11, wherein the luggage (10) packaged in their wrapper (18) are conveyed in an automated way towards the hold (14) of the aircraft (12).

13. Method for automated processing of luggage (10) in an aircraft (12) according to one of the preceding claims, wherein the various luggages (10) to be processed have identical shapes and volumes.

14. Method for automated processing of luggage (10) in an aircraft (12) according to one of the preceding claims, wherein the device (16) for automated processing of luggage (10) uses the information provided by the the visual markers (26) for arranging the different luggage (10) into the hold without any loss of volume.

15. Method for automated processing of luggage (10) in an aircraft (12) according to one of the preceding claims, wherein the hold (14) is numerically modelled by an external device to create a virtual environment acquired by the device (16) for automated processing of luggage (10).
